# EUROPÄISCHE PATENTANMELDUNG

(11) **EP 4 651 324 A1**
(43) Veröffentlichungstag der Anmeldung: **19.11.2025**
(21) Anmeldenummer: 24175421.7
(22) Anmeldetag: 13.05.2024
(51) Int. Cl.: H02G 3/04

(54) **KABELKANAL**

(71) Anmelder: Alcom International GmbH, 72770 Reutlingen (DE)
(72) Erfinder: Möller, Olaf, 72770 Reutlingen (DE)
(74) Vertreter: Christ, Niko

(57) **Zusammenfassung**

Für bestimmte Situationen ist ein Kabelkanal notwendig, der verhindert, dass in den Kabelkanal eingesteckte Kabel herausfallen. Bekannte Kabelkanäle weisen lediglich ein Trogprofil auf, in dem die Kabel geführt werden können. Wird ein solches Trogprofil an einer Wand, bzw. an einer Decke installiert, können hineingesetzte Kabel während des Verlegens leicht wieder herausfallen. Zudem muss ein passender Deckel separat aufgesetzt werden.

Der erfindungsgemäße Kabelkanal sieht wenigstens eine Gummilippe vor, die von einer Seitenwand ausgehend in das Trogprofil einragt, um eingelegte Kabel provisorisch zu sichern.

## Beschreibung

Die vorliegende Erfindung betrifft einen Kabelkanal, umfassend ein Trogprofil mit zwei Seitenwänden, die über einen Boden miteinander verbunden sind.

Solche Vorrichtungen zum Schutz sowie zur Führung eines darin aufgenommenen Gegenstands werden im Stand der Technik bereits eingesetzt. Je nach Anwendungsgebiet stellen bekannte Kabelkanäle einen wichtigen Bestandteil zur Gewährleistung einer sicheren Führung dar, die Kabel können somit einfach geordnet und geführt werden, wodurch aufwändige Unterputzinstallationen, Staub auf den Kabeln oder etwaige Beschädigungen an den Kabeln vermieden werden können. Durch die Verwendung von Kabelkanälen werden somit Reparaturarbeiten sowohl reduziert als auch erleichtert. Gleichzeitig kann eine höhere Sicherheit gewährleistet werden, da durch gehäufte Kabel gefährliche Hindernisse entstehen, zudem können Kabel mithilfe eines Kabelkanals einfacher zugeordnet werden, die auch optisch keine eine einfachere Identifikation eines bestimmten Kabels ermöglichen.

Gerade im Industrieumfeld ist oftmals eine Installation unter Putz gar nicht möglich, so dass Kabelkanäle vorgesehen werden müssen. Diese müssen dann in einer möglichst einfachen, jedoch haltbaren Weise an den vorhandenen Installationen angebracht werden.

Bei den aus dem Stand der Technik bekannten Kabelkanälen lassen sich die Kabel jedoch umständlicher in den Kabelkanal einbringen, insbesondere bei der Installation von Kabelkanälen entlang von Decken wird die Arbeit durch aus dem Kabelkanal herausfallenden Kabel erschwert, zusätzlich kann ein Deckel erst im Nachhinein montiert werden.

Vor diesem Hintergrund liegt der vorliegenden Erfindung die Aufgabe zugrunde, einen Kabelkanal zum Schutz und zur geordneten Führung von Kabeln zu schaffen, die bereits bei der Montage von Kabeln an Decken oder Wänden die Kabel vor einem Herausfallen sichert und eine Montage der Abdeckung einer Vorrichtung erleichtert.

Dies gelingt durch einen Kabelkanal gemäß den Merkmalen des unabhängigen Anspruchs 1. Sinnvolle Ausgestaltungen einer solchen Vorrichtung können den sich anschließenden abhängigen Ansprüchen entnommen werden.

Vorgesehen ist insoweit ein Kabelkanal, umfassend ein Trogprofil mit zwei Seitenwänden, die über einen Boden miteinander verbunden sind. Erfindungsgemäß ist ein solcher Kabelkanal dadurch gekennzeichnet, dass wenigstens einer der Seitenwände zumindest abschnittsweise eine Lippe angeformt ist, welche sich in das Trogprofil hinein erstreckt, um in dem Trogprofil aufgenommene Gegenstände gegen ein Herausfallen zu sichern, wobei entweder die wenigstens eine Lippe oder wenigstens eine der Seitenwände elastisch ausgebildet ist.

Die wenigstens eine in das Trogprofil einragende Lippe dient dazu, ein einmal in den Kabelkanal eingelegtes Kabel gegen ein Herausfallen zu sichern. Beim Einlegen des Kabels in den Kabelkanal wird die Lippe zur Seite gedrückt und das Kabel in den Kabelkanal geschoben. Die Vorspannung der Lippe und deren Materialfestigkeit sorgt für genügend Widerstand, um ein Kabel in dem durch die Lippe zumindest teilweise geschlossenen Kabelkanal zu halten. Hierdurch kann das Anbringen von Kabeln an Wänden oder Decken erheblich vereinfacht werden. Dabei ist es möglich, sowohl die Seitenwand als auch die Lippe elastisch zu gestalten. Besonders bevorzugt wird jedoch die Lippe elastisch ausgestaltet, so dass die Seitenwände robuster sind und Schäden von außen fernhalten.

In einer konkreten Ausgestaltung kann die wenigstens eine Lippe aus einem transparenten Material gefertigt sein. Dadurch kann geprüft werden, ob sich bereits Kabel in dem Kabelkanal befinden, ohne die Halterung durch die Lippe bei der Prüfung lösen zu müssen. Aufgrund eines Aufdrucks oder einer Farbgebung, sowie des Querschnitts eines Kabels kann gegebenenfalls durch die Lippe hindurch noch weitere Information über das Kabel durch die Lippe hindurch ermittelt werden, ohne dass die Gefahr besteht, dass die Kabel hierbei herausfallen.

In weiterer Ausgestaltung kann die wenigstens eine Lippe aus einem Gummimaterial und/oder einem elastischen Kunststoff hergestellt sein. Dies bewirkt, dass die wenigstens eine Lippe nachgibt, wenn ein Gegenstand hindurch gesteckt wird, und ihn gleichzeitig vor Herausfallen bewahren kann. Ebenfalls kann die Lippe leicht zur Seite gedrückt werden, wenn ein Kabel doch einmal aus dem Kabelkanal entnommen werden soll.

Zudem kann vorgesehen sein, dass die wenigstens eine Lippe mit der Seitenwand einen spitzen Winkel einschließt. Die in Richtung auf den Boden des Trogprofils angestellte Lippe sorgt dafür, dass eine größere Kraft seitens des eingelegten Kabels aufgebracht werden muss, um eine solchermaßen vorgespannte Lippe zu passieren. Hierdurch kann effektiv verhindert werden, dass ein hindurch gesteckter Gegenstand ohne Weiteres rückwärts bewegt wird und somit aus dem Kabelkanal herausfällt.

In weiterer Ausgestaltung kann vorgesehen sein, dass zwei Lippen verwendet werden, welche sich von den beiden sich gegenüberstehenden Seitenwänden in das Trogprofil hineinerstrecken um in dem Trogprofil aufgenommene Gegenstände gegen ein Herausfallen zu sichern. Durch die Verwendung zweier vorzugsweise symmetrisch angeordneter Lippen kann die Handhabung bei einem Hindurchstecken und anschließenden Herausnehmen von Gegenständen erleichtert werden, ohne dass dabei die Funktion der Lippen beeinträchtigt wird. Insbesondere wird verhindert, dass ein Herausrutschen an der dem Lippenanschluss gegenüberliegenden Seitenwand erfolgt. Auf beiden Seiten angeordnete Lippen schließen die in dem Kabelkanal aufgenommenen Kabel besser ein.

In besonderer Ausgestaltung kann vorgesehen sein, dass dem Trogprofil ein Deckel angeformt ist, derart, dass mithilfe des Deckels das Trogprofil verschließbar ist, wobei der Deckel zwischen sich und einer der Seitenwände ein Filmscharnier einschließt. Hierdurch kann der Deckel einfacher geschlossen werden, da er nicht als zusätzliches Teil angebracht werden muss. Zudem können Deckel und Trogprofil als ein gemeinsames Teil hergestellt werden und der Deckel kann zu einem späteren Zeitpunkt nicht verlorengehen.

Konkret kann der Deckel mit der dem Filmscharnier gegenüberliegenden Seitenwand des Trogprofils einrastend verschließbar sein. Hierdurch ist nur ein Umklappen des Deckels um eine Längsachse des Filmscharniers erforderlich, um den Deckel zu verschließen. Dem Deckel kann entlang seiner freien Kante ein Rastmittel angeformt sein, welches in ein der gegenüberliegenden Seitenwand angeformtes Gegenrastmittel eingreift.

Weiter kann vorgesehen sein, dass das Trogprofil an einer Außenseite des Bodens Rastmittel zur lösbaren Verbindung mit einer hinterschnittenen Nut eines Nutprofils aufweist. Gerade im Bereich von Industrieanlagen besteht weder die Möglichkeit einer Unterputzverlegung von Kabeln, noch wäre eine so dauerhafte Lösung von Interesse. Soweit ein Verlegen insbesondere von Nutprofilen erfolgen soll, kann der Kabelkanal Rastmittel in Form von gegenüberliegenden Rastnasen oder Rastkanten aufweisen, welche in die hinterschnittenen Nuten der Nutprofile eingreifen und den Kabelkanal auf den Profilschienen fixieren. Solche Rastkanten können dann insbesondere vom Ende her bei Bedarf wieder aus der Nut ausgefädelt werden, so dass sich der Kabelkanal rückstandsfrei entfernen lässt.

In einer alternativen Ausgestaltung kann jedoch auch vorgesehen sein, dass das Trogprofil auf einer Außenseite des Bodens wenigstens ein Befestigungselement aufweist, welches über wenigstens eine Klemmaufnahme mit dem Trogprofil verbunden ist und auf seiner von dem Trogprofil abgewandten Seite Rastmittel zur lösbaren Verbindung mit einer hinterschnittenen Nut eines Nutprofils aufweist. Durch das Zwischenlegen des Befestigungselements, das entweder durchgehend oder abschnittsweise vorgesehen ist, kann der Kabelkanal nicht nur an einem Nutprofil angebracht werden, sondern entweder ohne Befestigungsmittel direkt an einer Wand oder mit beliebigen Befestigungsmitteln an unterschiedlichen Untergründen und verschiedenen Nutprofilen.

In besonderer Ausfertigung kann das Trogprofil einstückig durch Strangextrusion hergestellt werden, wodurch eine schnelle und kostengünstige Produktion ermöglicht werden kann.

Die vorstehend beschriebene Erfindung wird im Folgenden Anhand eines Ausführungsbeispiels näher erläutert.

Es zeigen
- Figur 1: einen Kabelkanal mit zwei Gummilippen und einem Befestigungselement in einer Querschnitts- Explosionsdarstellung, sowie
- Figur 2: den Kabelkanal in einer Einbausituation an einem Nutprofil in einer Querschnittsdarstellung.

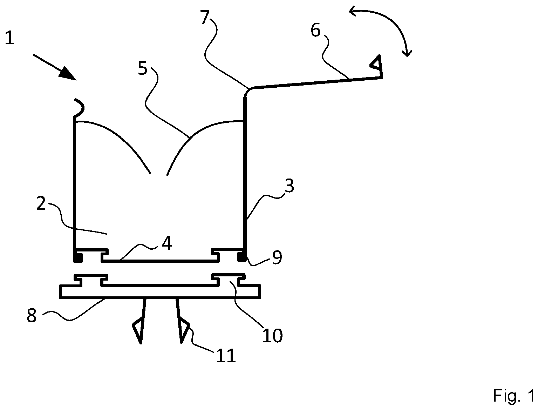

Figur 1 zeigt einen Kabelkanal 1, welcher im Wesentlichen aus einem Trogprofil 2 hergestellt ist. In einem solchen Trogprofil 2 können bei einem solchen Kabelkanal 1 Kabel eingelegt werden, welche für den Betrachter unsichtbar und möglichst wenig störend verlegt werden sollen. Soweit solche Kabelkanäle 1 am Boden verlegt werden sollen, besteht an sich kein Problem, da die eingelegten Kabel aufgrund der Schwerkraft in dem Trogprofil 2 verbleiben. Werden die Kabel jedoch an der Wand oder gar entlang der Decke verlegt, so können diese während und nach der Installation herausfallen. Selbstverständlich gibt es bereits seit Langem die Möglichkeit, Kabelkanäle mit Deckeln zu sichern, so dass auch der Zeitraum nach der Installation unkritisch ist. Während der Installation wäre jedoch häufig die Möglichkeit sinnvoll, Kabel im Kabelkanal zu verlegen, ohne dass diese sofort wieder herausfallen und ohne dass gleichzeitig Maßnahmen wie eine mechanische Sicherung durch Verkleben oder festschrauben benötigt werden.

Hierfür ist vorgesehen, dass das Trogprofil 2 zwei Seitenwände 3 aufweist, von denen her sich wenigstens einseitig, in Figur 1 jedoch von beiden Seiten her Lippen 5 in das Innere des Trogprofils 2 hineinerstrecken. Diese sind so vorgeformt, das sie mehr oder minder senkrecht von den Seitenwänden 3 abgehen und dann in Richtung des Bodens 4 gebogen sind. Ein Kabel, welches in den Kabelkanal 1 eingelegt ist, muss daher zunächst genügend Kraft aufbringen, die elastische Biegung einer Lippe 5 umzukehren und soweit sich die Lippen 5 in der Mitte treffen, auch die Kraft zum Aufbiegen der zweiten Lippe 5, wenn diese die erste Lippe 5 kontaktiert. Umgekehrt sind die Lippen transparent, so dass ein Herausnehmen von Kabeln in vielen Fällen für die reine Kontrolle nicht erforderlich sein wird.

Sobald die Installation abgeschlossen ist beziehungsweise wenn eine Kontrolle nicht mehr benötigt wird, kann ein Deckel 6 geschlossen werden, der an einer der Seitenwände 3 über ein Filmscharnier 7 angelenkt ist. Der Deckel kann dadurch einstückig mit dem Trogprofil 2 hergestellt werden und kann nicht verloren werden. Nach einem Zuklappen des Deckels 6 kann dieser mit einer randständigen Rastkante in eine entsprechende Aufnahme an der gegenüberliegenden Seitenwand 3 einrasten, so dass er auch in einem herabhängenden Zustand geschlossen bleibt und dadurch auch einen dauerhaften Rückhalt für in dem Kabelkanal 1 verlegte Kabel darstellt.

An einem Boden 4 des Trogprofils 2 sind ferner Klemmaufnahmen 9 vorgesehen, welche im Querschnitt T-förmig sind und in die formschlüssig gebildete Klemmelemente 9 eines Befestigungselements 8 eingreifen können. Das Befestigungselement 8 trägt auf seiner von den Klemmelementen 9 abgewandten Seite Rastmittel, mit denen das Befestigungselement 8 und mit ihm der über die Klemmelemente 10 und die Klemmaufnahmen 9 an dem Befestigungselement 8 befestigte Kabelkanal 1.

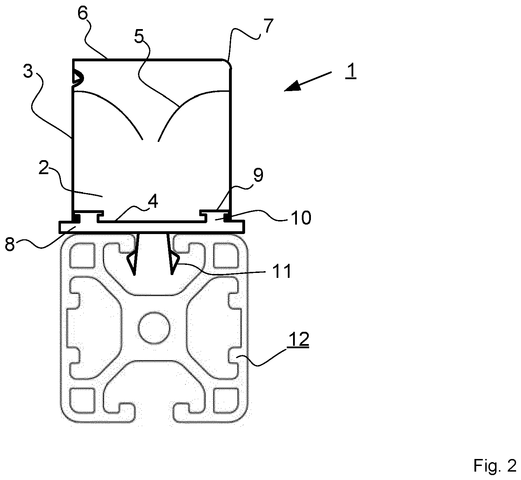

Figur 2 zeigt den Kabelkanal 1 in einer Einbausituation an einem Nutprofil 12, wobei die Rastmittel 11 in eine hinterschnittene Nut des Nutprofils 12 eingreifen. Das Befestigungselement 8 liegt dabei flächig auf einer Seite des Nutprofils 12 auf und bietet dem wiederum auf dem Befestigungselement 8 eingeclipsten Trogprofil 2 einen sicheren Halt. Der geschlossene Deckel 6 sorgt dafür, dass in den Kabelkanal 1 eingelegte Kabel nicht aus dem Kabelkanal 1 herausfallen können.

Vorstehend beschrieben ist somit ein Kabelkanal zum Schutz und zur geordneten Führung von Kabeln, die bereits bei der Montage von Kabeln an Decken oder Wänden die Kabel vor einem Herausfallen sichert und eine Montage der Abdeckung einer Vorrichtung erleichtert.

### BEZUGSZEICHENLISTE

- 1: Kabelkanal
- 2: Trogprofil
- 3: Seitenwand
- 4: Boden
- 5: Lippe
- 6: Deckel
- 7: Filmscharnier
- 8: Befestigungselement
- 9: Klemmaufnahme
- 10: Klemmelement
- 11: Rastmittel
- 12: Nutprofil

## Patentansprüche

1. Kabelkanal (1), umfassend ein Trogprofil (2) mit zwei Seitenwänden, die über einen Boden (4) miteinander verbunden sind,
**dadurch gekennzeichnet, dass** wenigstens einer der Seitenwände zumindest abschnittsweise eine Lippe (5) angeformt ist, welche sich in das Trogprofil (2) hinein erstreckt, um in dem Trogprofil (2) aufgenommene Gegenstände gegen ein Herausfallen zu sichern, wobei entweder die wenigstens eine Lippe (5) oder wenigstens eine der Seitenwände elastisch ausgebildet ist.

2. Kabelkanal gemäß Anspruch 1, **dadurch gekennzeichnet, dass** die wenigstens eine Lippe (5) aus einem transparenten Material gefertigt ist.

3. Kabelkanal gemäß einem Ansprüche 1 oder 2, **dadurch gekennzeichnet, dass** die wenigstens eine Lippe (5) aus einem Gummimaterial und/oder einem elastischen Kunststoff hergestellt ist.

4. Kabelkanal gemäß einem der vorhergehenden Ansprüche, **dadurch gekennzeichnet, dass** die wenigstens eine Lippe (5) mit der Seitenwand (3) einen spitzen Winkel einschließt.

5. Kabelkanal gemäß einem der vorhergehenden Ansprüche, **dadurch gekennzeichnet, dass** zwei Lippen (5) verwendet werden, welche sich von den beiden sich gegenüberstehenden Seitenwänden in das Trogprofil hineinerstrecken um in dem Trogprofil (2) aufgenommene Gegenstände gegen ein Herausfallen zu sichern.

6. Kabelkanal gemäß Anspruch 1, **dadurch gekennzeichnet, dass** dem Trogprofil ein Deckel (6) angeformt ist, derart, dass mithilfe des Deckels (6) das Trogprofil (2) verschließbar ist, wobei der Deckel (6) zwischen sich und einer der Seitenwände ein Filmscharnier (7) einschließt.

7. Kabelkanal gemäß Anspruch 6, **dadurch gekennzeichnet, dass** der Deckel (6) mit der dem Filmscharnier gegenüberliegenden Seitenwand (3) des Trogprofils (2) einrastend verschließbar ist.

8. Kabelkanal gemäß einem der vorhergehenden Ansprüche, **dadurch gekennzeichnet, dass** das Trogprofil (2) an einer Außenseite des Bodens (4) Rastmittel (11) zur lösbaren Verbindung mit einer hinterschnittenen Nut eines Nutprofils (12) aufweist.

9. Kabelkanal gemäß einem der vorhergehenden Ansprüche, **dadurch gekennzeichnet, dass** das Trogprofil (2) auf einer Außenseite des Bodens (4) wenigstens ein Befestigungselement (8) aufweist, welches über wenigstens eine Klemmaufnahme (9) mit dem Trogprofil (2) verbunden ist und auf seiner von dem Trogprofil (2) abgewandten Seite Rastmittel (11) zur lösbaren Verbindung mit einer hinterschnittenen Nut eines Nutprofils (12) aufweist.

10. Kabelkanal gemäß einem der vorhergehenden Ansprüche, **dadurch gekennzeichnet, dass** das Trogprofil (2) einstückig durch Strangextrusion hergestellt ist.
